# EUROPEAN PATENT SPECIFICATION

(11) **EP 2 748 995 B1**
(45) Date of publication and mention of the grant of the patent: **23.01.2019**
(21) Application number: 12738125.9
(22) Date of filing: 23.07.2012
(51) Int. Cl.: H04L 25/03, H04L 5/00

(54) **A METHOD TO FACILITATE THE MINIMIZATION OF INTER-CELL INTERFERENCE BY EXPLOITING ITS KNOWN CHARACTERISTICS**
VERFAHREN ZUR MINIMIERUNG VON ZWISCHENZELLINTERFERENZ UNTER AUSNUTZUNG IHRER BEKANNTEN EIGENSCHAFTEN
PROCÉDÉ POUR FACILITER LA RÉDUCTION AU MINIMUM DU BROUILLAGE INTERCELLULAIRE PAR EXPLOITATION DE SES CARACTÉRISTIQUES CONNUES

(30) Priority: 22.08.2011 ES 201131406 P
(43) Date of publication of application: 02.07.2014
(73) Proprietor: Telefónica, S.A., 28013 Madrid (ES)
(72) Inventor: BERBERANA, Ignacio, E-28013 Madrid (ES); LORCA, Javier, E-28013 Madrid (ES); VEGA, Avelina, E-28013 Madrid (ES); PABLO, María Luz, E-28013 Madrid (ES); APARICIO, María Teresa, E-28013 Madrid (ES); VILLANÚA, Ana, E-28013 Madrid (ES)
(74) Representative: Carlos Hernando, Borja
(86) International application number: PCT/EP2012/064371
(87) International publication number: WO 2013/026643

(56) References cited:
- WO-A1-2011/119750
- WO-A2-2010/040098
- WO-A2-2012/064998
- LG ELECTRONICS: "SIC-based ICIC in heterogeneous network", 3RD GENERATION PARTNERSHIP PROJECT (3GPP); TECHNICALSPECIFICATION GROUP (TSG) RADIO ACCESS NETWORK (RAN); WORKINGGROUP 1 (WG1)#59B, XX, XX , no. R1-100235 18 January 2010 (2010-01-18), pages 1-4, XP002636256, Retrieved from the Internet: URL:http://www.3gpp.org/ftp/tsg_ran/WG1_RL 1/TSGR1_59b/Docs/R1-100235.zip [retrieved on 2011-05-09]
- l. Berberana, M. T. Aparicio, A. Villanua, J. Lorca, A. Gouraud, R. Visoz, S. Martinez, F. Diehm, H. Schoeneich, K. Fang: "Flexible interference control - concepts", Advanced Radio InTerface Technologies for 4G SysTems, ARTIST4G , 5 October 2011 (2011-10-05), XP002684264, Retrieved from the Internet: URL:https://ict-artist4g.eu/projet/work-pa ckages/wp2/deliverables/d2.4/final/d2.4-pd f [retrieved on 2012-09-27]
- I. Berberana, H. Schoeneich: "Flexible interference control - evaluation", Advanced Radio InTerface Technologies for 4G SysTems, ARTIST4G , 29 June 2012 (2012-06-29), XP002684263, Retrieved from the Internet: URL:https://ict-artist4g.eu/projet/work-pa ckages/wp2/deliverables/d2.4/final/d2.4-pd f/at_download/file [retrieved on 2012-09-28]

## Description

### Field of the art

The present invention generally relates to a method to facilitate the minimization of inter-cell interference by exploiting its known characteristics (modulation and coding scheme), wherein the overall throughput of a user equipment connected to a serving cell of a cell network is affected by the presence of inter-cell interference of at least a main interfering neighbour cell of said cell network, said user equipment incorporating Successive Interference Cancellation, or SIC, capabilities, and more particularly to a method that comprises performing a resources scheduling mechanism and/or power control process in said cell network according to the availability of said SIC capabilities in said user equipment.

### Prior State of the Art

In the last years a number of advanced techniques have been incorporated into the receivers used in mobile communications to improve their coverage and capacity. Developments like linear (e.g., Minimum Mean Squared Error - MMSE) and non linear (Maximum Likelihood - ML) receivers, along with joint detection and interference cancellation techniques have helped to improve the spectral efficiency of the mobile systems. Literature about these technologies is ample and easily accessible [2][3][4][5]. The incorporation of multiantenna technologies, usually referred as MIMO, and OFDM modulation, which are proposed for new generation mobile communications, has opened new ways for innovations on this area [1].

The introduction of advanced receiver techniques for mobile and wireless communications is considered a standard independent issue, in the sense that, in principle, it should not have impact on the protocols used in the network. In this sense, it is transparent to the network operation. In some cases, the availability of advanced receivers may be taken into account in the planning process in the network dimensioning. In this sense, 3GPP has decided to consider a MMSE MIMO detection algorithm as the benchmark in the default evaluation algorithm for the LTE Advanced downlink receiver.

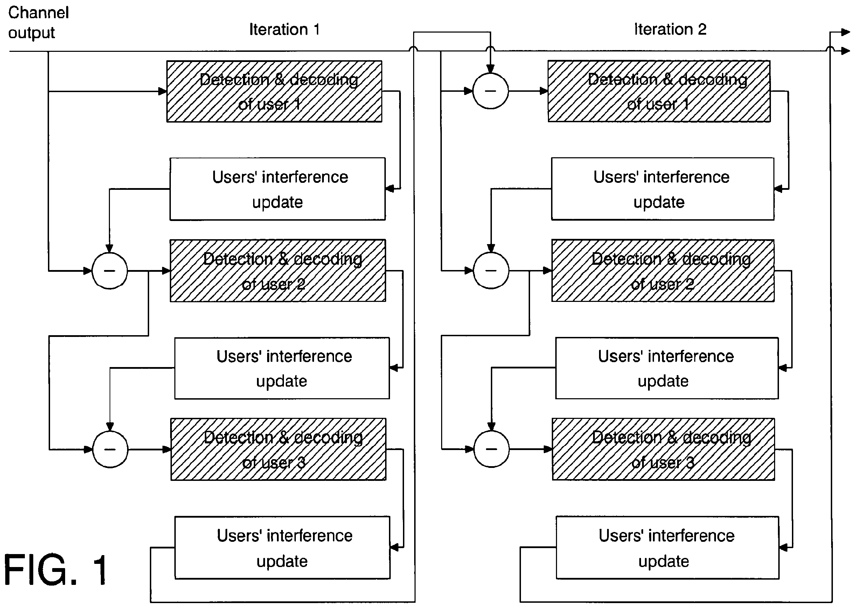

Some UEs incorporate Successive Interference Cancellation capabilities as one of said advanced receiver techniques. The scheme that is used by this kind of receivers will be reflected in Figure 1. The operating procedure for this kind of receivers is the following:
To the receiver antenna(s) arrive the signals from different cells, some of them to be decoded and others constituting no resolvable interference. Firstly the signal that is received with the higher power/best quality is detected and demodulated. It should not necessarily be the signal that carries the information sent to the UE. From the demodulated bits and the channel estimation, the signal (without overlapping interference) is regenerated and then subtracted from the original received signal. In this way the interference from the first, stronger signal is eliminated and it becomes possible to detect and demodulate the second stronger signal with a higher quality. The process can be repeated for several users and it is possible also to carry out several iterations of the same process (the quality of the detection, given by the BER, BLER or any other parameter can increase significantly with the number of iterations, at the expense of increased complexity and processing time). It should be noticed that the decoding result is sensitive to the order in which computations are carried out (i.e., which signal is detected and decoded firstly).

In order to carry out the process described above it is necessary:
- To be able to estimate the channel from the signals received to be demodulated. This requires being able to detect the pilots or reference signals used for each transmission.
- To know the modulation and coding scheme used in each of the signals that are being demodulated. This is required to regenerate the signal to be subtracted en each step of the decoding process iteration.

Both things are naturally achieved when the system is employing, for example, multiuser MIMO transmission, where the SIC receiver can be used to eliminate inter-user interference, as it is said in [7] (in the case of single user MIMO, SIC receivers can be used to eliminate interlayer interference). In this case different reference signals, either multiplexed in time, frequency or code, are assigned to each transmitting antenna (allowing for carrying out the channel estimation) and the modulation and coding scheme is known through the scheduling information.

Patent application WO 2010/040098 (A2) describes a cooperation strategy selection for a network multiple-in-multiple-out (N-MIMO) communication system wherein one or more nodes in a communication system capable of N-MIMO communication can calculate marginal utilities, projected per-user rates, and/or other parameters corresponding to respective associated users. Based on these calculations, respective network nodes can perform user scheduling and selection, cell scheduling and selection, selection of a cooperation strategy. On contrary of the present invention, in WO 2010/040098 (A2) the information about the modulation and coding scheme is part of the PDDCH, not a reference signal, resulting in a decoder of greater complexity. Moreover, said application requires as well the use of CoMP techniques.

### Problems with existing solutions

The availability of advanced receivers in the UEs results in the possibility of dimensioning the mobile network, whether it is GSM, UMTS or LTE, with more relaxed interference protection parameters (e.g., reuse factor in a TDMA system). However, the benefits that can be achieved in this way are not realizable unless all, or at least a large percentage of, the UEs operating in the network incorporate the advanced receivers. Unfortunately, this is very difficult to achieve in practical situations, where a significant number of users are using legacy UEs and the cost of upgrading them are quite high.

An alternative way of obtaining the same benefits of interference cancellation is the use of techniques of cooperative multipoint transmission and reception, usually referred as CoMP [6]. When these techniques are employed, the UE receives (or transmit) more than one data stream from (or to) more than one cell (in this sense, it can be considered as a single user MIMO system where the transmitting antennas are not assigned to the same cell). But these techniques also require special receivers that support them. In the presence of legacy UEs, the efficiency of these schemes is not so clear.

Also CoMP solutions require the existence of high capacity links between cooperating cells (or the availability of a centralized controller), which usually results in a limited number of cells being able cooperate (the set of cooperating cells is usually referred as cluster). Cells that are not part of the same cluster will not be able to cooperate. In the first versions of LTE-Advanced, for example, CoMP is limited to cells within the same site.

Other possible solution is to limit the inter-cell interference using resource allocation schemes, known as Inter Cell Interference Coordination (ICIC) techniques, that look for orthogonality in time and/or frequency of the resources assigned to interfering cells. These techniques have the inconvenience that they do not allow full use of resources and results in lower overall capacity (although they provide improved throughput for cell edge users).

### Description of the Invention

The invention is defined by the appended claims. Embodiments not falling under the scope of the claims should be interpreted as examples useful for understanding the invention. It is necessary to offer an alternative to the state of the art which covers the gaps found therein, particularly related to the lack of proposals which really improve the performance of the mobile systems by considering the availability of user equipments with advanced receivers in the scheduling and power control processes carried out by the networks.

To that end, the present invention provides a method to facilitate the minimization of inter-cell interference by exploiting its known characteristics (mainly, modulation and coding scheme of the interfering signals), thus exploiting inter-cell interference (in the sense of not treating it as noise but using its known structure to improve the link quality), wherein the overall throughput of a user equipment connected to a serving cell of a cell network is affected by the presence of inter-cell interference of at least a main interfering neighbour cell of said cell network, said user equipment incorporating Successive Interference Cancellation (SIC) capabilities.

On contrary to the known proposals, the method of the invention, in a characteristic manner comprises performing a resources scheduling mechanism and/or power control process in said cell network according to the availability of said SIC capabilities in said user equipment, the cell network including a LTE network and the resources scheduling mechanism and/or power control process comprising:
- using said SIC capabilities in said user equipment if the difference between a working signal of said serving cell and said inter-cell interference is below a threshold value, said difference being calculated by means of said user equipment, the latter further communicating to said cell network if the difference between said working signal and said inter-cell interference is below said threshold value or the difference being calculated in said cell network according to measurements submitted by said user equipment to said cell network;
- sending, said serving cell, a user equipment identifier of said user equipment to said at least one main interfering neighbour cell;
- performing, when said user equipment is in the circumstance of using said SIC capabilities, a negotiation phase between both cells to coordinate transmission to support the use of said SIC capabilities; and
once said negotiation phase has finished, informing to said user equipment the results of said negotiation phase in order to carry out interference cancellation procedures, according to said SIC capabilities by means of an Interference Cancellation Reference Signal, or IC-RS, transmitted to said user equipment in a Resource Element, wherein a different IC-RS is transmitted by each antenna port and each of said IC-RS at least indicates the modulation and coding schemes employed by corresponding cell, wherein the method further comprises:
- exchanging, on said negotiation phase, modulation and coding schemes between said serving cell and said at least one main interfering neighbour cell and reserve a set of resources for said user equipment, the serving cell and the at least one main interfering neighbour cell belonging to the same eNodeB or to the same Radio Access Network infrastructure;
- establishing a common scheduling decision based on said exchange of modulation and coding schemes to be used by said serving cell and said at least one main interfering neighbour cell, said common scheduling decision dynamically adapted to the propagation conditions of each cell in each Transmission Time Interval; and
- reserving, on said negotiation phase, a set of resources for said user equipment and establishing a common scheduling decision based on a common modulation and coding scheme to be used by said serving cell and said at least one main interfering neighbour cell.

Other embodiments of the method of the first aspect of the invention are described according to appended claims 2 to 11, and in a subsequent section related to the detailed description of several embodiments.

### Brief Description of the Drawings

The previous and other advantages and features will be more fully understood from the following detailed description of embodiments, with reference to the attached drawings (some of which have already been described in the Prior State of the Art section), which must be considered in an illustrative and non-limiting manner, in which:
Figure 1 shows the current scheme used by Successive Interference Cancellation receivers in the case of three users detected and two iterations.
Figure 2 shows the network elements and interfaces involved in the present invention.
Figure 3 shows the values of SINR that lead to the activation of the SIC enabled operation, according to an embodiment of the present invention.
Figure 4 shows the exchange of information between the serving cell and the interfering cell during the negotiation phase, according to an embodiment of the present invention.
Figure 5 shows the location of the IC-RS in the fourth symbol of the LTE subframe, according to an embodiment of the present invention.
Figure 6 shows the flow diagram of the overall process carried out by the elements involved in the method of the invention.

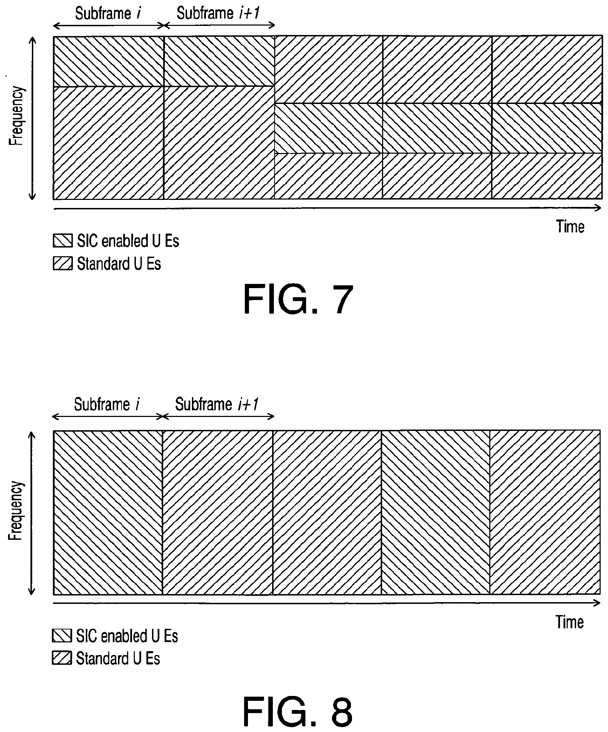

Figure 7 shows the pre-assignation of resources in the frequency domain, according to an embodiment of the present invention.
Figure 8 shows the pre-assignation of resources in the time domain, according to an embodiment of the present invention.
Figure 9 shows a possible application of the present invention in the case of a user device connected to a macro network and said user device is in the coverage area of a femtocell operating in Closed Subscriber Group mode.
Figure 10 shows a possible application of the present invention in the case of a user device connected to a femtocell situated in the extended range are of the macrocell.

### Detailed Description of Several Embodiments

The basic objective of the proposed invention is to improve the performance of the downlink in those situations where the signal to interference plus noise ratio (SINR) is very low due to the presence of one or more very strong interferers.

The approach considered in this invention is that there are possibilities of improving the performance of the mobile systems by considering the availability of user equipments (UEs) with advanced receivers in the scheduling and power control processes carried out by the networks. This approach requires new procedures and modifications of the network protocols. The innovation disclosed here is intended to exploit in an innovative way that requires network involvement the availability of UEs with advanced receivers.

Specifically, this patent proposal deals with methods and apparatus required in the access network of a mobile communication system in order to take advantage of the availability of UEs that incorporate Successive Interference Cancellation capabilities by means of a new resources scheduling mechanism. It does not propose any specific receiver technology, but it can be used by UEs that implement several of the solutions proposed for SIC receivers available.

The present invention is directed to a method and apparatus to enhance overall throughput in mobile communications systems with UEs that support Successive Interference Cancellation (SIC) receivers. The system under consideration is LTE-Advanced, but the principles can be applied to other technologies, and is especially applicable in heterogeneous networks environment. The invention defines the way of improving cell edge performance and can be combined with other technological solutions, like Cooperative Multipoint (CoMP) transmission.

In order to eliminate the intercell interference with SIC receivers some new procedures and elements should be introduced in the network. They are basically the following:
- A mechanism to identify when the SIC associated procedures may be activated and implemented.
- A negotiation procedure to agree on the scheduling of information between cells in order to allow the support of interference cancellation.
- A signalling procedure to provide the UE with the required information to carry out the interference cancellation process.
- A mechanism for identifying when the operational mode should be changed and/or mobility procedures should be activated.

The present invention proposes a set of original procedures to cover the objectives indicated above.

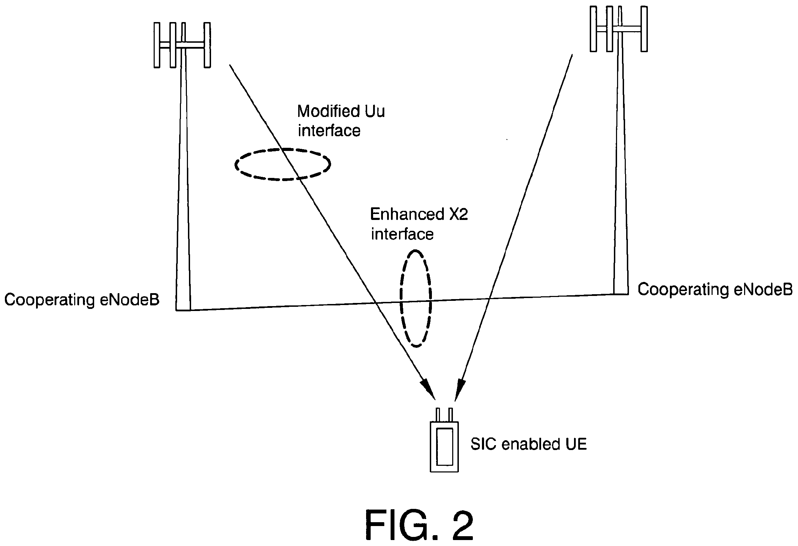

The invention is detailed here for the case of a LTE-Advanced network, although it could be generalized to other mobile communication systems, like the evolution of HSPA. The invention assumes that there is tight time synchronization between the cells that are involved in procedure defined. It also assumes that the X2 interface (or a similar interface) is available between the cooperating eNodeBs. The network elements that cooperate in the scheme and the interfaces involved were represented in Figure 2.

The UE capabilities are declared to the network in the RRC connection establishment phase or are retrieved from the MME. The access network (i.e., the eNodeBs) should keep a list of the UEs that implement SIC receivers. The network should provide to the UE a threshold value for the activation of the interference cancellation procedure. This value would be provided by means of corresponding System Information Block (SIB) and corresponds to the difference in the signal level between the serving cell and the main interferer. Each cell keeps a list of the SIC capable UEs that are being served by it and it is sent, every time that it is updated, to all the cells that are included in its neighbours list.

When a UE detects that the difference between the serving signal level and the main interferer is below the interference cancellation threshold, it communicates the circumstance to the network. Alternatively, it could be the network that can detect the situation from the measurements submitted by the UE. For these purposes, the measurement configuration events should be defined in such a way that reporting happens at signal to interference values higher than the interference cancellation threshold.

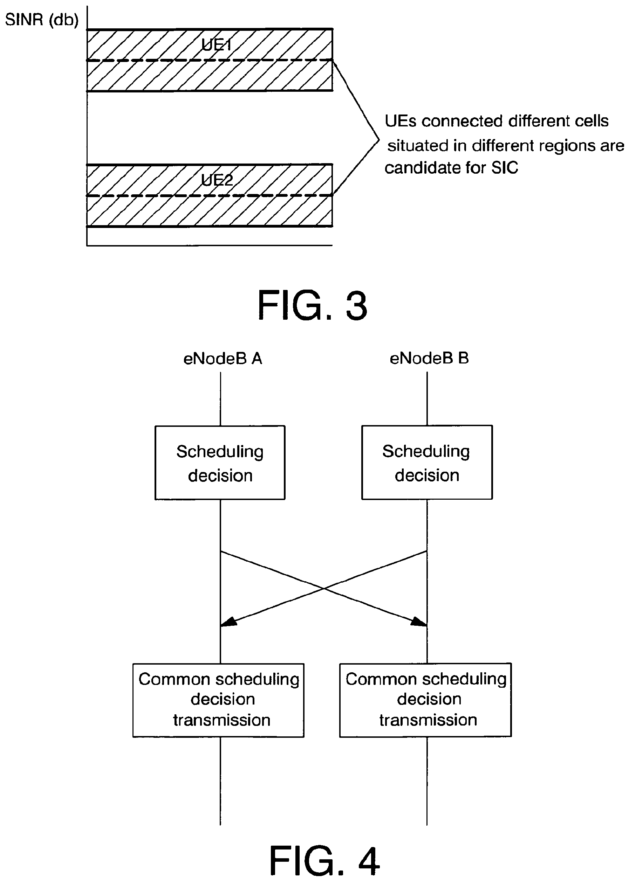

The values of SINR that lead to the activation of the SIC enabled operation were represented in Figure 3.

When a cell detects that a SIC capable UE is in an adequate situation to exploit this capability, it sends a message to the main interfering cell to indicate the UE identifier. A negotiation phase ensues between both cells in order to coordinate transmission to support the use of SIC capabilities. There are two possibilities contemplated:
- If the communication link between cells is fast enough to support the exchange of modulation and coding schemes (MCS) between them, then the cells agree on the resources reserved for SIC capable UEs. This may be the case of cells that belong to the same eNodeB or when a cloud RAN infrastructure is implemented. These resources may be semi-statically reserved or may be selected by any other criteria, for example, those that provide a higher scheduling gain for the UE with worse propagation conditions.
- If the communication link is not fast enough to support the exchange of information required for the previous operation mode, the cells should agree on a common scheduling policy, which would reserve a given set of resources and a modulation and coding scheme to be used by each cell. This MCS would be allocated in a semi-persistent way, i.e., it should be used until one of the cells notifies the other that the MCS is not adequate.

The amount of resources that are reserved for SIC-capable UEs in the cells involved can be estimated based on the traffic profiles of the UEs involved and the benefits expected from the application of the interference cancellation. Subsequent transport blocks sizes are selected such that they correspond with the resources agreed and the MCS selected. In the negotiation process it is also agreed the use of a temporal identifier for each of the cells involved. The identifier, which is proposed to be called IC-TCI (Interference Cancellation Temporal Cell Identifier), can take a value from 0 to 6 and will be used for some procedures that will be explained later. Also, information about the number of antenna ports and the transmission mode used in each cell is exchanged between the cells.

Once the negotiation process is finished, the UE should be informed in order to be able to carry out interference cancellation procedures. This can be done in two different ways, corresponding to the capabilities of the network interconnecting the eNodeBs indicated above. In all cases it is assumed that the UE is aware of the physical cell identity (PCI) of the interfering eNodeB, so it is possible for it to know the location of the Reference Signals of the interfering signal and can perform the channel estimation. For this to happen it is necessary that the cell is included in the neighbours list.

If the links between cells are fast enough to support dynamic exchange of MCS, then the serving cell and the interfering cell should not necessarily use a pre-agreed MCS, but use one that is adapted to the actual propagation conditions of each cell in each TTI. However, each cell should be aware of the MCS used in the other cell within the interval between the scheduling decision in each cell and the transmission of the scheduling information to the UEs in each cell, as shown in Figure 4.

Two solutions are proposed for the communication of the scheduling information of UEs in other cells.

In the first proposed solution, the serving cell informs the UE of the MCS employed by the interfering cell along with its own assigned MCS in the PDCCH. This is proposed to be done reusing the mechanism used for Carrier Aggregation in LTE Advanced, that allows the scheduling of several carriers from a single one. For these purposes LTE Advanced specifications define a parameter denominated Carrier Indication Field (CIF) that indicates the carrier to which the grant applies to enable cross-carrier scheduling. As there are 3 bits allocated for the CIF but only 5 carriers can be aggregated, so it is possible to reserve a specific value, say (1,1,1), for intercell interference cancellation purposes. So the carrier identified as (1,1,1) represents the scheduling information for the interfering UE.

The main problem with this option, that would require minimum modifications of the standard, is that can only be applied for the cancellation of a single interferer.

The second solution proposed is based in the definition of an Interference Cancellation Reference Signal (IC-RS), which is transmitted to each UE in a different resource element (RE). Different IC-RS are transmitted by each antenna port. Each cell involved mutes in the UE reserved for the other cells IC-RSs, so they can be received with better quality. The IC-RS used indicates the MCS employed by each cell, so the UE can learn from the MCS used by other cells listening to their IC-RSs (the serving cell mutes its own signal during these REs). The IC-RSs can also be used for the improvement of the channel estimation of the serving and the interfering cells.

For the implementation of the IC-RS, it is proposed to use orthogonal sequences, similar to those employed for CS-RS. Two IC-RS are transmitted per PRB. The first one is used for phase reference and will always be the same, whilst the phase of the second indicates the MCS that is being used. It should be noticed that the cell should take into account the assignment of REs either to IC-RSs or REs to be muted in the selection of the MCS to be used, so the UE can recover the information lost.

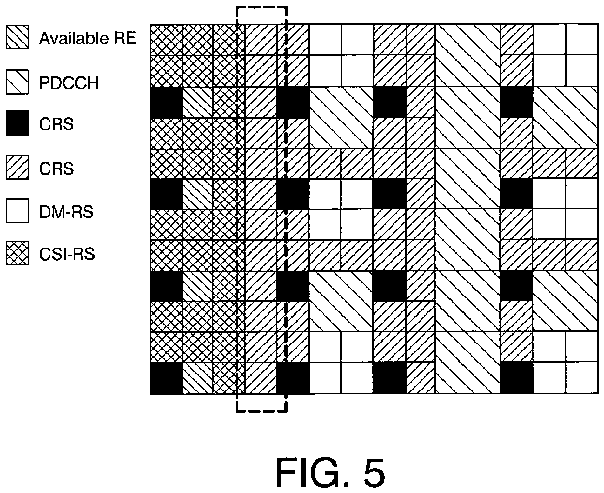

For the location of the IC-RS it is proposed to assign them to REs in the fourth symbol of the subframe, as shown in Figure 5. In this way they will not overlap with other RSs or with the PDCCH. This symbol is also used for the transmission of UE specific RS associated with transmission mode 7 but it is considered that this mode will no longer be used once Release 10 transmission mode 9 becomes available.

As two REs are required per antenna port, a maximum of 6 cells in SISO mode or 3 cells in MIMO 2x2 mode can be supported with the scheme. The location of the IC-RS for each of the cells involved should be based on their identifiers, in the same way the location of the DM-RS is established.

The UE should be able to detect which mechanism is used without requiring information from the network.
- The scheduling is carried out is communicated using the CIF mechanism, the UE will detect the corresponding CDI format in PDCCH.
- If IC-RS area used, the UE will detect the presence of the basic RS sequence sent over the corresponding RE.

In the case of slow eNodeB interconnection, the resources for interfering and interferer UEs are negotiated and then pre-assigned in each base station, as well as the MCS that they are going to use, at least in a temporal basis (several subframes, 50-500 considered reasonable values). The scheduling decision is communicated in the same way defined for the previous case (CA mechanism or use of the IC-RS). However, in this one the scheduling decision should be communicated just one time, and not renewed until the pre-assignation changes. The UE applies the SIC mechanism assuming that the MCS of the interfering cell has not been modified.

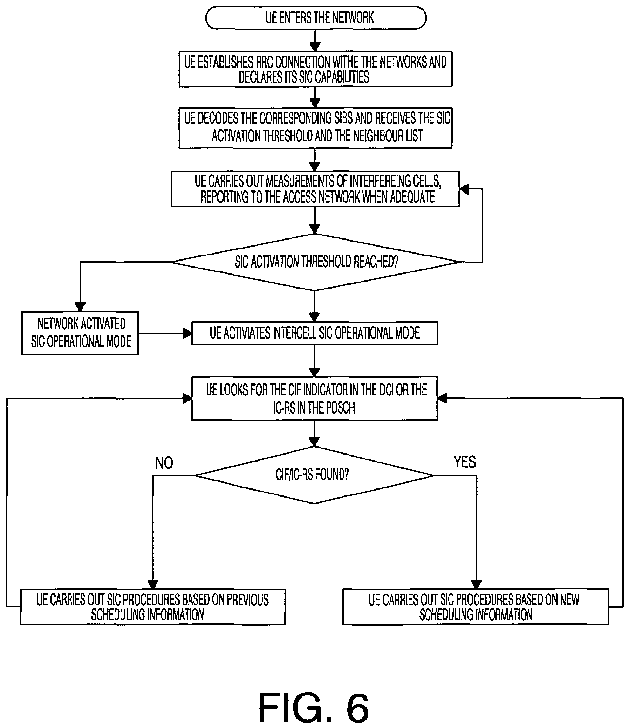

The overall process steps was represented in the Figure 6.

The pre-assignation of the resources can be carried out in the frequency domain, reserving a set of subcarriers for the SIC capable UEs, or in the time domain, assigning specific subframes to this mode of operation.

Frequency domain pre-assignation is the preferred option for macrocell environments whilst the time domain pre-assignation is considered the best option for heterogeneous networks. In both cases it is assumed that precise frequency and time synchronization between involved cells is provided by the network.

### Advantages of the invention

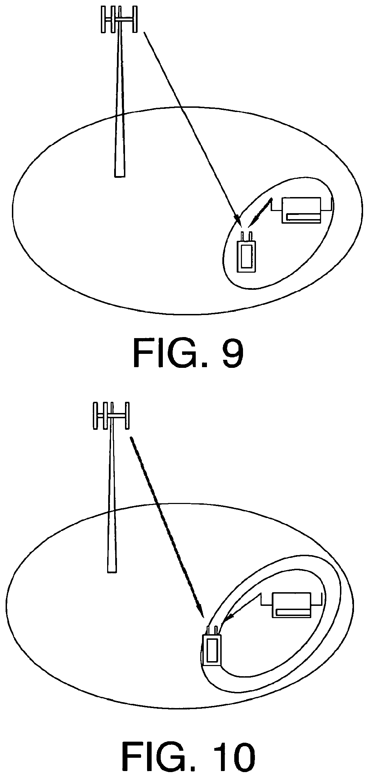

One possible application is the operation of macro network connected users that are operating in the coverage area of a femtocell operating in CSG mode. The macrocell UE cannot perform handover to the femtocell and also (if the latter is situated far from the cell edge) cannot perform handover to a different macrocell. The situation was depicted in Figure 9.

In this case, the solution proposed allows for a better QoS/QoE and a lower drop connection probability for the macrocell connected UE.

A second application scenario is the operation of a femtocell connected UE situated in the extended range area of the cell. The purpose of this area, where to optimal connection would be to the macrocell, is to allow a more uniform distribution between the macro and the femtocell. In this situation, the interference is quite high, so the usual solution is to time multiplex the resources shared by both cells. The situation was depicted in Figure 10.

In this case the invention proposed allows for not having to recur to time multiplexing solutions and will allow for a significant increase of the overall system capacity. Being connected to the femtocell will also translate into a reduce interference level in the uplink.

The advantages provided by the invention will depend on the characteristics of the propagation channel and the interferences. In an environment with a high frequency selectivity, which can take advantage of a frequency selective scheduling, the gain will be lower. In the same way, an operating environment where the number of significant interferers is relatively high and the interference power from each one is similar will not be adequate for taking advantage of the innovation proposed. However, femtocell operating environments are the ones that will allow to take advantage of the invention characteristics.

A person skilled in the art could introduce changes and modifications in the embodiments described without departing from the scope of the invention as it is defined in the attached claims.

### ACRONYMS

- 3GPP: Third Generation Partnership Project
- BER: Bit Error Rate
- BLER: Block Error Rate
- CIF: Carrier Indication Field
- CRS: Cell specific Reference Signal
- CSG: Closed Subscribers Group
- CSI: Channel State Information
- CSI-RS: Channel State Information Reference Signal
- DM-RS: Demodulation Reference Signal
- HSPA: High Speed Packet Access
- ICIC: Inter Cell Interference Coordination
- IC-TCI: Interference Cancellation Temporal Cell Identifier
- GSM: Global System for Mobile communications
- LTE: Long Term Evolution
- LTE-A: Long Term Evolution-Advanced
- MCS: Modulation and Coding Scheme
- MIMO: Multiple Input Multiple Output
- ML: Maximum Likelihood
- MME: Mobility Management Entity
- MMSE: Minimum Mean Squared Error
- OFDM: Orthogonal frequency Division Multiplexing
- PDCCH: Physical Dedicated Control Channel
- PRB: Physical Resource Block
- RAN: Radio Access Network
- RE: Resource Element
- RRC: Radio Resource Control
- RS: Reference Signal
- SIB: System Information Block
- SIC: Successive Interference Cancellation
- SINR: Signal-to-Noise-plus-Interference Ratio
- TDMA: Time Division Multiple Access
- TTI: Transmission Time Interval
- UE: User Equipment
- UMTS: Universal Mobile Telecommunication System

### REFERENCES

[1] J.G. Andrews et al., "Overcoming Interference in Spatial Multiplexing MIMO Cellular Networks", IEEE Wireless Communications, Vol. 14, No. 6, pp. 95-104, Dec 2007.
[2] J. Ketonen and M. Juntti, "SIC and K-BEST LSD receiver implementation for a MIMO-OFDM System", Proc. European Signal Processing Conference, 2008.
[3] S. Verdu, "Minimum probability of error for asynchronous Gaussian multiple-access channels", IEEE Transactions on Information Theory, vol. 32, Jan. 1986, pp. 85-96.
[4] M. Ohm, "SIC receiver in a mobile MIMO-OFDM system with optimization for HARQ operation," Proc. International OFDM Workshop, 2008.
[5] G. Berardinelli, C. Navarro Manchon, L. Deneire, T.B. Sorensen, P. Mogensen, and K. Pajukoski, "Turbo receivers for single user MIMO LTE-A uplink," Proc. IEEE Vehicular Technology Conference Spring, 2009.
[6] D. Gesbert, S. Hanly, H. Huang, S. Shamai, O. Simeone, and W. Yu, "Multi-Cell MIMO Cooperative Networks: A New Look at Interference," IEEE Journal On Selected Areas In Communications, VOL. 28, NO. 9, December 2010
[7] LG Electronics: "SIC-based ICIC in heterogeneous network", 3rd Generation Partnership Project (3GPP); Technicalspecification Group (TSG) Radio Access Network (RAN); Workinggroup 1 (WG1) (2010-01-18).

## Claims

1. A method to facilitate the minimization of inter-cell interference by exploiting its known characteristics including a modulation and coding scheme of interfering signals provided by a network, wherein the overall throughput of a user equipment connected to a serving cell of a cell network is affected by the presence of inter-cell interference of at least a main interfering neighbour cell of said cell network, said user equipment incorporating Successive Interference Cancellation, SIC, capabilities, and said method comprising performing a resources scheduling mechanism and/or power control process in said cell network according to the availability of said SIC capabilities in said user equipment, said cell network including a LTE network and said resources scheduling mechanism and/or power control process comprising:
- using said SIC capabilities in said user equipment if the difference between a working signal of said serving cell and said inter-cell interference is below a threshold value, said difference being calculated by means of said user equipment, the latter further communicating to said cell network if the difference between said working signal and said inter-cell interference is below said threshold value or the difference being calculated in said cell network according to measurements submitted by said user equipment to said cell network;
- sending, said serving cell, a user equipment identifier of said user equipment to said at least one main interfering neighbour cell;
- performing, when said user equipment is in the circumstance of using said SIC capabilities, a negotiation phase between both cells to coordinate transmission to support the use of said SIC capabilities; and
once said negotiation phase has finished, informing to said user equipment the results of said negotiation phase in order to carry out interference cancellation procedures, according to said SIC capabilities by means of an Interference Cancellation Reference Signal, or IC-RS, transmitted to said user equipment in a Resource Element, wherein a different IC-RS is transmitted by each antenna port and each of said IC-RS at least indicates the modulation and coding schemes employed by corresponding cell,
wherein the method further comprises:
- exchanging, on said negotiation phase, modulation and coding schemes between said serving cell and said at least one main interfering neighbour cell and reserve a set of resources for said user equipment, the serving cell and the at least one main interfering neighbour cell belonging to the same eNodeB or to the same Radio Access Network infrastructure;
- establishing a common scheduling decision based on said exchange of modulation and coding schemes to be used by said serving cell and said at least one main interfering neighbour cell, said common scheduling decision dynamically adapted to the propagation conditions of each cell in each Transmission Time Interval; and
- reserving, on said negotiation phase, a set of resources for said user equipment and establishing a common scheduling decision based on a common modulation and coding scheme to be used by said serving cell and said at least one main interfering neighbour cell.

2. A method as per claim 1, comprising communicating, said user equipment, said SIC capabilities to said serving cell.

3. A method as per claim 2, wherein the SIC capabilities are communicated in the Radio Resource Control establishment phase or are retrieved from the Mobility Management Entity.

4. A method as per any of previous claims, comprising providing, said serving cell, said threshold value to said user equipment by means of corresponding System Information Block.

5. A method as per any of previous claims, comprising keeping, said serving cell, a list of SIC capable user equipments and sending, said serving cell, said list to said at least one main interfering neighbour cell, said at least one main interfering neighbour cell being included in a neighbour list of said serving cell.

6. A method as per claim 1, wherein said set of resources are semi-statically reserved or selected by a specific criteria.

7. A method as per claim 1, wherein said common modulation and coding scheme is allocated in a semi-persistent way.

8. A method as per claim 1 or 6, wherein said set of resources are assigned in a set of subcarriers in the frequency domain or in a set of subframes in the time domain.

9. A method as per any of previous claims, comprising exchanging, on said negotiation phase, information about the number of antenna ports, the transmission mode used in each cell and a temporal identifier for each cell between said serving cell and said at least one main interfering neighbour cell.

10. A method as per claim 1, wherein said IC-RS is implemented by means of orthogonal sequences and the method further comprising sending two IC-RS per Physical Resource Block, wherein the first IC-RS is used for phase reference and the phase of the second IC-RS indicates said modulation and coding schemes to be used.

11. A method as per claim 10, comprising assigning said IC-RS in the fourth symbol of a LTE subframe and assigning each IC-RS to a Resource Block according to a temporal identifier.

## Patentansprüche

1. Verfahren zur Minimierung von Zwischenzellinterferenz unter Ausnutzung ihrer bekannten Eigenschaften beinhaltend ein Modulations- und Kodierungsschema von interferierenden Signalen, welche von einem Netzwerk bereitgestellt werden, wobei der Gesamtdurchsatz eines Benutzergeräts, welches mit einer bedienenden Zelle eines Zellennetzwerks verbunden ist, vom Vorhandensein von Zwischenzellinterferenz mindestens einer interferierenden Hauptnachbarzelle des genannten Zellennetzwerks beeinträchtigt wird, wobei das genannte Benutzergerät nachfolgende Interferenzunterdrückung, SIC, -Fähigkeiten eingliedert, und wobei das genannte Verfahren das Durchführen eines Ressourcenplanungsmechanismus und/oder eines Leistungssteuerungsprozesses im genannten Zellennetzwerk gemäß der Verfügbarkeit der genannten SIC-Fähigkeiten im genannten Benutzergerät umfasst, wobei das genannte Zellennetzwerk ein LTE-Netzwerk beinhaltet und wobei der genannte Ressourcenplanungsmechanismus und/oder Leistungssteuerungsprozess Folgendes umfasst:
- das Verwenden der genannten SIC-Fähigkeiten im genannten Benutzergerät, wenn der Unterschied zwischen einem Arbeitssignal der genannten bedienenden Zelle und der genannten Zwischenzellinterferenz unter einem Schwellenwert liegt, wobei der genannte Unterschied mittels des genannten Benutzergeräts berechnet wird, wobei das Letztere zusätzlich dem genannten Zellennetzwerk kommuniziert, wenn der Unterschied zwischen dem genannten Arbeitssignal und der genannten Zwischenzellinterferenz unter dem genannten Schwellenwert liegt oder wobei der Unterschied im genannten Zellennetzwerk gemäß Messungen berechnet wird, welche vom genannten Benutzergerät dem genannten Zellennetzwerk zugestellt werden;
- das Senden, von der genannten bedienenden Zelle, eines Benutzergerätidentifikators des genannten Benutzergeräts der genannten mindestens einen interferierenden Hauptnachbarzelle;
- das Durchführen, wenn das genannte Benutzergerät unter den Umständen des Verwendens der genannten SIC-Fähigkeiten ist, einer Verhandlungsphase zwischen beiden Zellen, um die Übertragung zu koordinieren, um die Verwendung der genannten SIC-Fähigkeiten zu unterstützen; und
sobald die genannte Verhandlungsphase beendet ist, das Benachrichtigen dem genannten Benutzergerät der Ergebnisse der genannten Verhandlungsphase, um Interferenzunterdrückungsverfahren durchzuführen, gemäß den genannten SIC-Fähigkeiten mittels eines Interferenzunterdrückungsreferenzsignals, oder IC-RS, welches dem genannten Benutzergerät in einem Ressourcenelement übertragen wird, wobei ein unterschiedliches IC-RS von jedem Antennenanschluss übertragen wird und wobei jedes der genannten IC-RS mindestens die von der entsprechenden Zelle angewendeten Modulations- und Kodierungsschemen anzeigt,
wobei das Verfahren zusätzlich Folgendes umfasst:
- den Austausch, in der genannten Verhandlungsphase, von Modulations- und Kodierungsschemen zwischen der genannten bedienenden Zelle und der genannten mindestens einen hauptsächlich interferierenden Nachbarzelle und die Reservierung eines Satzes von Ressourcen für das genannte Benutzergerät, wobei die bedienende Zelle und die mindestens eine hauptsächlich interferierende Nachbarzelle dem gleichen eNodeB oder der gleichen Funkzugangsnetzinfrastruktur gehören;
- das Feststellen einer gemeinsamen Planungsentscheidung basierend auf dem genannten Austausch von Modulations- und Kodierungsschemen, welche von der genannten bedienenden Zelle und der genannten mindestens einen hauptsächlich interferierenden Nachbarzelle zu verwenden sind, wobei die genannte gemeinsame Planungsentscheidung an die Ausbreitungsbedingungen jeder Zelle in jedem Übertragungszeitintervall dynamisch angepasst wird; und
- das Reservieren, in der genannten Verhandlungsphase, eines Satzes von Ressourcen für das genannte Benutzergerät und das Feststellen einer gemeinsamen Planungsentscheidung basierend auf einem gemeinsamen Modulations- und Kodierungsschema, welches von der genannten bedienenden Zelle und der genannten mindestens einen hauptsächlich interferierenden Nachbarzelle zu verwenden ist.

2. Verfahren nach Anspruch 1, welches das Kommunizieren, vom genannten Benutzergerät, der genannten SIC-Fähigkeiten der genannten bedienenden Zelle umfasst.

3. Verfahren nach Anspruch 2, wobei die SIC-Fähigkeiten in der Feststellungsphase der Funkressourcensteuerung kommuniziert werden oder von der Mobilitätsmanagemententität abgerufen werden.

4. Verfahren nach einem der vorhergehenden Ansprüche, welches das Bereitstellen, von der genannten bedienenden Zelle, des genannten Schwellenwerts dem genannten Benutzergerät mittels eines entsprechenden Systeminformationsblocks umfasst.

5. Verfahren nach einem der vorhergehenden Ansprüche, welches das Führen, von der genannten bedienenden Zelle, einer Liste von SIC-fähigen Benutzergeräten und das Senden, von der genannten bedienenden Zelle, der genannten Liste der genannten mindestens einen hauptsächlich interferierenden Nachbarzelle umfasst, wobei die genannte mindestens eine hauptsächlich interferierende Nachbarzelle in der Nachbarliste der genannten bedienenden Zelle beinhaltet ist.

6. Verfahren nach Anspruch 1, wobei der genannte Satz von Ressourcen mittels eines spezifischen Kriteriums halbstatisch reserviert oder ausgewählt wird.

7. Verfahren nach Anspruch 1, wobei das genannte gemeinsame Modulations- und Kodierungsschema auf einer halbpersistenten Weise zugewiesen wird.

8. Verfahren nach Anspruch 1 oder 6, wobei der genannte Satz von Ressourcen in einem Satz von Zwischenträgern in der Frequenzdomäne oder in einem Satz von Subframes in der Zeitdomäne zugeordnet wird.

9. Verfahren nach einem der vorhergehenden Ansprüche, welches den Austausch, in der genannten Verhandlungsphase, von Auskunft über die Anzahl von Antennenanschlüssen, den in jeder Zelle verwendeten Übertragungsmodus und einen zeitlichen Identifikator für jede Zelle zwischen der genannten bedienenden Zelle und der genannten mindestens einen hauptsächlichinterferierenden Nachbarzelle umfasst.

10. Verfahren nach Anspruch 1, wobei das genannte IC-RS mittels orthogonaler Sequenzen implementiert wird und wobei das Verfahren zusätzlich das Senden zweier IC-RS pro physikalischer Ressourcenblock umfasst, wobei das erste IC-RS für die Phasenreferenz verwendet wird und die Phase des zweiten IC-RS die genannten zu verwendenden Modulations- und Kodierungsschemen anzeigt.

11. Verfahren nach Anspruch 10, welches das Zuordnen des genannten IC-RS im vierten Symbol eines LTE-Subrahmens und das Zuordnen jedes IC-RS einem Ressourcenblock gemäß einem zeitlichen Identifikator umfasst.

## Revendications

1. Procédé pour faciliter la réduction au minimum de brouillage intercellulaire par exploitation de ses caractéristiques connues comprenant un schéma de modulation et de codage de signaux interférents fournis par un réseau, dans lequel le débit global d'un équipement d'utilisateur connecté à une cellule de desserte d'un réseau cellulaire est affecté par la présence de brouillage intercellulaire d'au moins une cellule voisine interférente principale dudit réseau cellulaire, ledit équipement d'utilisateur incorporant des capacités d'annulation de brouillage successive, SIC, et ledit procédé comprenant la mise en oeuvre d'un mécanisme de planification de ressources et/ou une procédure de commande de puissance dans ledit réseau cellulaire selon la disponibilité desdites capacités de SIC dans ledit équipement d'utilisateur, ledit réseau cellulaire comportant un réseau LTE et ledit mécanisme de planification de ressources et/ou la procédure de commande de puissance comprenant :
- l'utilisation desdites capacités de SIC dans ledit équipement d'utilisateur si la différence entre un signal de travail de ladite cellule de desserte et ledit brouillage intercellulaire est inférieure à une valeur de seuil, ladite différence étant calculée par le biais dudit équipement d'utilisateur, ce dernier communiquant en outre audit réseau cellulaire si la différence entre ledit signal de travail et ledit brouillage intercellulaire est inférieure à ladite valeur de seuil ou la différence étant calculée dans ledit réseau cellulaire selon des mesures présentées par ledit équipement d'utilisateur audit réseau cellulaire;
- l'envoi, par ladite cellule de desserte, d'un identificateur d'équipement d'utilisateur dudit équipement d'utilisateur à ladite au moins une cellule voisine interférente principale;
- la mise en oeuvre, lorsque ledit équipement d'utilisateur est en train d'utiliser lesdites capacités de SIC, d'une phase de négociation entre les deux cellules pour coordonner la transmission pour supporter l'utilisation desdites capacités de SIC; et
une fois ladite phase de négociation terminée, informer ledit équipement d'utilisateur des résultats de ladite phase de négociation afin de mener les procédures d'annulations de brouillage, selon lesdites capacités de SIC par le biais d'un signal de référence d'annulation de brouillage, ou IC-RS, transmis audit équipement d'utilisateur dans un élément de ressource, dans lequel un IC-RS différent est transmis par chaque port d'antenne et chacun dudit IC-RS indique au moins les schémas de modulation et de codage employés par la cellules correspondante, dans lequel le procédé comprend en outre:
- l'échange, dans ladite phase de négociation, de schémas de modulation et de codage entre ladite cellule de desserte et ladite au moins une cellule voisine interférente principale et réserver un jeu de ressources pour ledit équipement, la cellule de desserte et l'au moins une cellule voisine interférente principale appartenant au même eNodeB ou à la même infrastructure de réseau d'accès radio;
- l'établissement d'une décision d'ordonnancement commune basée sur ledit échange de schémas de modulation et de codage à utiliser par ladite cellule de desserte et ladite au moins une cellule voisine interférente principale, ladite décision d'ordonnancement commune étant adaptée dynamiquement aux conditions de propagation de chaque cellule dans chaque intervalle de temps de transmission; et
- la réserve, dans ladite phase de négociation, d'un jeu de ressources pour ledit équipement d'utilisateur et établissement d'une décision d'ordonnancement commune basée sur un schéma de modulation et codage commun à utiliser par ladite cellule de desserte et ladite au moins une cellule voisine interférente principale.

2. Procédé selon la revendication 1, comprenant la communication, par ledit équipement d'utilisateur, desdites capacités de SIC à ladite cellule de desserte.

3. Procédé selon la revendication 2, dans lequel les capacités de SIC sont communiquées dans la phase d'établissement de commande de ressource radio ou sont récupérées de l'entité de gestion de mobilité.

4. Procédé selon l'une quelconque des revendications précédentes, comprenant la fourniture, par ladite cellule de desserte, de ladite valeur de seuil audit équipement d'utilisateur par le biais du bloc d'information de système correspondant.

5. Procédé selon l'une quelconque des revendications précédentes, comprenant le maintient, par ladite cellule de desserte, d'une liste d'équipements d'utilisateurs capables de SIC et l'envoi, par ladite cellule de desserte, de ladite liste à ladite au moins une cellule voisine interférente principale, ladite au moins une cellule voisine interférente principale étant comprise dans une liste voisine de ladite cellule de desserte.

6. Procédé selon la revendication 1, dans lequel ledit jeu de ressources est réservé ou choisi de manière semi-statique par des critères spécifiques.

7. Procédé selon la revendication 1, dans lequel ledit schéma de modulation et codage commun est assigné d'une manière semi-permanente.

8. Procédé selon les revendications 1 ou 6, dans lequel le jeu de ressources est assigné dans un jeu de sous-porteuses dans le domaine de fréquences ou dans un jeu de sous-trames dans le domaine temporel.

9. Procédé selon l'une quelconque des revendications précédentes, comprenant l'échange, dans ladite phase de négociation, de l'information sur le nombre de ports d'antenne, le mode transmission utilisé dans chaque cellule et un identificateur temporel pour chaque cellule entre ladite cellule de desserte et ladite au moins une cellule voisine interférente principale.

10. Procédé selon la revendication 1, dans lequel ledit IC-RS est mis en oeuvre par le biais de séquences orthogonales et le procédé comprend en outre l'envoi de deux IC-RS par bloc de ressources physiques, dans lequel le premier IC-RS est utilisé pour la référence de phase et la phase du second IC-RS indique lesdits schémas de modulation et de codage à utiliser.

11. Procédé selon la revendication 10, comprenant assigner ledit IC-RS dans le quatrième symbole d'une sous-trame de LTE et assigner chaque IC-RS à un bloc de ressources selon un identificateur temporel.
